# EUROPÄISCHE PATENTSCHRIFT

(11) **EP 2 870 396 B1**
(45) Veröffentlichungstag und Bekanntmachung des Hinweises auf die Patenterteilung: **10.08.2022**
(21) Anmeldenummer: 13732515.5
(22) Anmeldetag: 28.06.2013
(51) Int. Cl.: F16L 3/10, H02G 3/32, H02G 3/00, F16L 3/127, B60R 16/02

(54) **BEFESTIGUNGSEINRICHTUNG ZUR FIXIERUNG EINES KABELS**
FASTENING DEVICE FOR FIXING A CABLE
DISPOSITIF DE FIXATION PERMETTANT DE FIXER UN CÂBLE

(30) Priorität: 04.07.2012 DE 102012013210; 21.12.2012 DE 102012224173
(43) Veröffentlichungstag der Anmeldung: 13.05.2015
(73) Patentinhaber: Continental Automotive Technologies GmbH, 30165 Hannover (DE)
(72) Erfinder: DENNER, Timo, 74626 Bretzfeld (DE); MUSOLF, Tobias, 65719 Hofheim (DE); Bolla, Szabolcs, 60488 Frankfurt am Main (DE)
(74) Vertreter: Continental Corporation
(86) Internationale Anmeldenummer: PCT/EP2013/063662
(87) Internationale Veröffentlichungsnummer: WO 2014/005945

(56) Entgegenhaltungen:
- EP-A1- 0 257 367
- WO-A1-96/07829
- WO-A1-2008/054285
- DE-A1- 4 123 754
- FR-A1- 2 885 671
- GB-A- 2 317 936
- US-A- 6 164 604
- US-A1- 2009 265 895
- US-A1- 2010 198 006
- US-A1- 2012 138 333
- US-B1- 6 581 884
- US-B1- 6 632 994

## Beschreibung

Die Erfindung betrifft eine Befestigungseinrichtung zur Fixierung eines Kabels. Eine solche Befestigungseinrichtung ist, zum Beispiel, aus den Patentschriften DE4123754A1, US2010198006A1, US6632994B1 oder US2012138333A1 bekannt.

Das der Erfindung zu Grunde liegende technische Problem:
Bei der routengebundenen Verlegung von Kabeln bzw. flexiblen Versorgungsleitungen im Raum müssen diese an Fixpunkten befestigt werden. Dies geschieht entweder durch Fixierungen (sog. Brackets) an der Grundstruktur, die ein Kabel bzw. flexible Versorgungsleitung aufnehmen oder am Kabel bzw. flexiblen Versorgungsleitung angebrachten Fixierungen, welche über ein Fügeverfahren mit der Grundstruktur verbunden werden.

An Kabeln bzw. flexiblen Versorgungsleitungen werden üblicherweise starre Fixierungen angebracht. Diese werden in einem vorab durchgeführten Montageprozess fest verbunden, so dass es beim Verlegeprozess aufgrund der Routenführung zu einer axialen Verdrehung der Fixierungen kommt. Für jede Art und Situation der Fügeverbindung kommt ein eigenständiger Typ der Fixierung zum Einsatz. Die Fixierungen sind in der Regel mehrteilig. Beim Verlegen muss durch Kraftaufwand das Kabel bzw. die flexiblen Versorgungsleitungen in die entsprechende Fügeposition gedreht werden. Die so eingebrachten Spannungen setzen sich von Fügeposition zu Fügeposition fort, beeinträchtigen die Verlegegeschwindigkeit und die Genauigkeit der Route.

### Stand der Technik:

Durch die axiale Orientierung der Fixierung in der Montage wird versucht der Route möglichst genau zu folgen. Das zieht einen hohen Montage- und Prüfaufwand und somit Kostenaufwand nach sich.

Über in einem separaten Fertigungsprozess (Spritzgießen, Aufschrumpfen) werden Lagerstellen angebracht. Darüber werden einseitig verschließbare Ringfixierungen montiert die axial frei drehen können. Das zieht einen zusätzlichen Fertigungsschritt und somit Kostenaufwand nach sich. Änderungen der Position auf dem Kabel bzw. der flexiblen Versorgungsleitung sind mit hohem Aufwand verbunden.

Der Erfindung liegt die Aufgabe zu Grunde, eine Befestigungseinrichtung zur Fixierung wenigstens eines Kabels vorzuschlagen, welche relativ kostengünstig und/oder zuverlässig ist und/oder eine verbesserte bzw. einfache Montage wenigstens eines Kabels ermöglicht und/oder die Fixierung des Kabels hinsichtlich der flexiblen und dabei insbesondere definierten, Ausrichtung des Kabels verbessert.

Diese Aufgabe wird gelöst durch die Befestigungseinrichtung gemäß Anspruch 1.

Die erfindungsgemäße Befestigungseinrichtung zur Fixierung wenigstens eines Kabels umfasst eine Schelle, zur Aufnahme und/oder Fixierung eines Kabels, wobei die Schelle so ausgebildet ist, dass sie das Kabel zumindest teilweise umgreifen kann bzw. umgreift und kraftschlüssig und/oder formschlüssig einspannen kann bzw. einspannt, und wobei die Befestigungseinrichtung ein Fixierelement aufweist, das ein Führungselement und ein Halteelement umfasst, wobei das Führungselement mechanisch mit der Schelle verbunden ist und das Halteelement so ausgelegt ist, dass dieses eine positionsfeste Lagerung der Befestigungseinrichtung ermöglicht, wobei das Führungselement in der Schelle, in einer die Schelle bezüglich deren Mantelfläche zumindest teilweise umlaufenden Lagerung, gelagert ist. Dies ist insbesondere so zu verstehen, dass das Führungselement in der zumindest teilweise umlaufenden Lagerung, der Schelle selbst, gelagert ist.

Es ist zweckmäßig, dass die zumindest teilweise umlaufende Lagerung der Schelle zur Lagerung des Führungselements zwei Nuten aufweist, welche so ausgebildet sind, dass sie jeweils eine Kante oder Seite des Führungselements aufnehmen und insbesondere wobei die Nuten jeweils im Wesentlichen entlang der Krümmung der Mantelfläche ausgebildet sind.

Das Führungselement weist vorzugsweise eine Platte auf, welche bzw. deren Grundfläche im Wesentlichen als Mantelflächensegment eines Zylinders ausgebildet ist und/oder insbesondere dem Krümmungsverlauf der Mantelfläche der Schelle entsprechend oder von diesem abhängig ausgebildet ist.

Es ist bevorzugt, dass die Schelle so ausgebildet ist, dass sie ein Kabel zumindest teilweise in kraftschlüssiger Art umgreifen und fixieren kann, so dass das Kabel in der Schelle gegen Verdrehen und Verschieben gesichert ist, indem die Schelle Haltemittel, insbesondere Halterippen, aufweist, welche das Kabel an dessen Außenumfang einspannen können.

Die Haltemittel der Schelle sind zweckmäßigerweise als Halterippen und/oder Haltenoppen und/oder Haltelamellen ausgebildet.

Die Halterippen der Schelle sind besonders bevorzugt hohl und/oder nicht massiv sowie elastisch ausgebildet. Ganz besonders bevorzugt weisen die Halterippen eine Wandstärke auf, welche geringer ist als ein Drittel oder insbesondere ein Fünftel der mittleren Breite der Halterippen oder der Höhe der Halterippen.

Es ist zweckmäßig, dass die Halterippen bezüglich ihrer Querschnittsfläche und/oder ihres Profils im Wesentlichen trapezförmig ausgebildet sind, insbesondere ist die nach innen gewandte Seitenfläche der Halterippen, welche zur Lagerung des Kabels ausgelegt ist, abgerundet ausgebildet, wobei die Abrundung als Ausnehmung in die Halterippenoberseitenfläche ausgebildet ist.

Es ist bevorzugt, dass die Schelle einstückig ausgebildet ist, wobei sie zwei Segmente aufweist, die miteinander an einer Seite verbunden sind, insbesondere mittels eines Filmscharniers und/oder mittels eines elastischen Stegs, und wobei die andere Seite auf- und zuklappbar ist und ein formschlüssiges Verschlussmittel aufweist.

Die Lagerung, umfassend die beiden Nuten, sowie das in dieser Lagerung gelagerte Führungselement sind zweckmäßigerweise so ausgebildet, dass Relativbewegungen entlang der Krümmung bzw. der Umfangslinie der Mantelfläche der Schelle zwischen der Schelle selbst und dem Fixierelement möglich sind.

Der Innendurchmesser des von den Halterippen der Schelle aufgespannten Raumes ist bevorzugt etwas geringer ausgeführt als der Außendurchmesser des aufzunehmenden bzw. einzuspanndenden Kabels bzw. der flexiblen Versorgungsleitung. Durch die dadurch erzeugte mechanische Spannung bzw. kraftsschlüssige Einspannung wird insbesondere eine Klemmwirkung bzw. ein Formschluss zwischen Kabel und Halterippen erzeugt, wobei sich Kabel und Halterippen jeweils leicht verformen. Dadurch wird eine axiale Relativbewegung bzw. ein Verschieben zwischen Kabel und Schelle verhindert.

Auf dem ersten und zweiten Segment der Schelle sind zweckmäßigerweise, insbesondere mittig bzw. symmetrisch zur mittigen Querschnittsfläche durch die Schelle, Nuten angebracht die mittels Hinterschnitt das halbrunde Gegensegment der variablen Fixierung aufnehmen. Das Führungselement des Fixierelements wird vor dem Einlagen des Kabels bzw. der flexiblen Versorgungsleitung und dem Zuklappen der Schelle in die durch die Nuten gebildete Lagerung eingelegt bzw. eingeführt.

Es ist zweckmäßig, dass das wenigstens eine Halteelement des Fixierelements als Zapfen oder Pfeilkopf bzw. "arrow head" bzw. "Tannenbaum" ausgebildet ist. Das Halteelement ist dabei insbesondere so ausgebildet, dass es in eine Ausnehmung bzw. Bohrung, besonders bevorzugt einer Fahrzeugkarosserie, einführbar und darin befestigbar und fixierbar ist.

Die Erfindung betrifft außerdem die Verwendung der Befestigungseinrichtung zur Fixierung wenigstens eines Kabels in Kraftfahrzeugen, dabei insbesondere zur Fixierung des Kabels eines Raddrehzahlsensors an der Fahrzeugkarosserie und/oder an Anbauteilen des Fahrzeugs bzw. der Fahrzeugkarosserie.

Weitere bevorzugte Ausführungsformen ergeben sich aus den Unteransprüchen und der nachfolgenden Beschreibung eines Ausführungsbeispiels an Hand von Figuren.

Es zeigen in schematischer Darstellung

Fig. 1 bis 6
ein Ausführungsbeispiel der Befestigungseinrichtung und deren Bauteile.

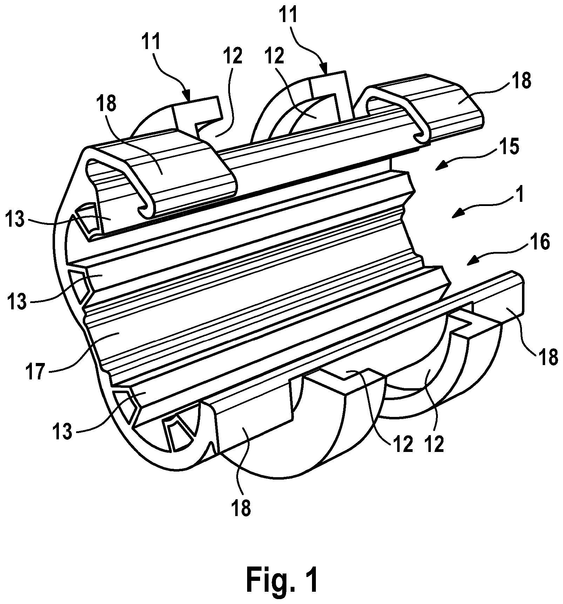

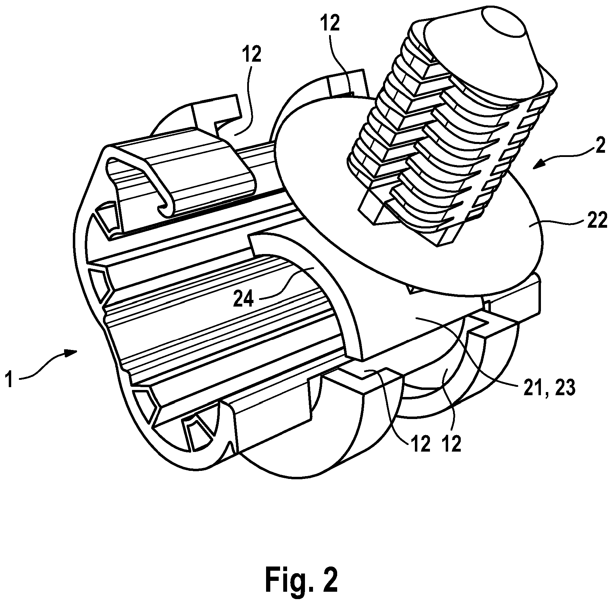

In Fig.1 ist die Schelle 1 dargestellt, die ein erstes und ein zweites Segment 15, 16 aufweist, die über ein Filmscharnier 17 bzw. einen elastischen Steg miteinander verbunden sind. Die Schelle weist innenliegende Halterippen 13 auf, welche zur Aufnahme bzw. Lagerung bzw. Einspannung eines Kabels ausgebildet sind. Die Halterippen sind beispielgemäß hohl ausgebildet mit einer definierten Wandstärke, damit die Halterippen mit einer definierten bzw. definierbaren Haltekraft auf das Kabel wirken. Schelle 1 weist zwei Nuten 12 auf, welche eine Lagerung bilden, die so ausgebildet ist, dass sie das Führungselement des Fixierelements, siehe Fig. 2, bezüglich der Mantelfläche der Schelle zumindest teilweise umlaufend lagert.

Die Lagerung 11, umfassend die beiden Nuten 12, sowie das in dieser Lagerung gelagerte Führungselement, siehe Fig. 2 sind so ausgebildet, dass Relativbewegungen entlang der Krümmung bzw. der Umfangslinie der Mantelfläche der Schelle 1 zwischen der Schelle selbst und dem Fixierelement möglich sind.

Schelle 1 umfasst außerdem ein Verschlussmittel 18, welches die beiden Segmente 15, 16 formschlüssig verbindet bzw. verbinden kann und die Schelle verschließt bzw. verschließen kann, wobei das Verschlussmittel so ausgebildet ist, dass dieses Verschließen als Einhaken und/oder Verrasten erfolgt.

Anhand der Fig. 2 ist das Fixierelement 2 veranschaulicht, das Führungselement 21 aufweist, welches eine Platte 23 umfasst. Dieses Führungselement 21 wird durch die zwei Nuten 12 der Schelle, welche eine Lagerung bilden und rotatorische Relativbewegungen zwischen Schelle 1 und Fixierelement 2 ermöglichen, aufgenommen. In Fig. 2 ist Führungselement 21 mit seiner Platte 23 noch nicht in die beiden Nuten 12 eingeführt, aber ist in einer Position dargestellt, welche unmittelbar vor dem Eintritt des Führungselements 21 in die Lagerung bzw. die Aufnahme durch die beiden Nuten 12 liegt.

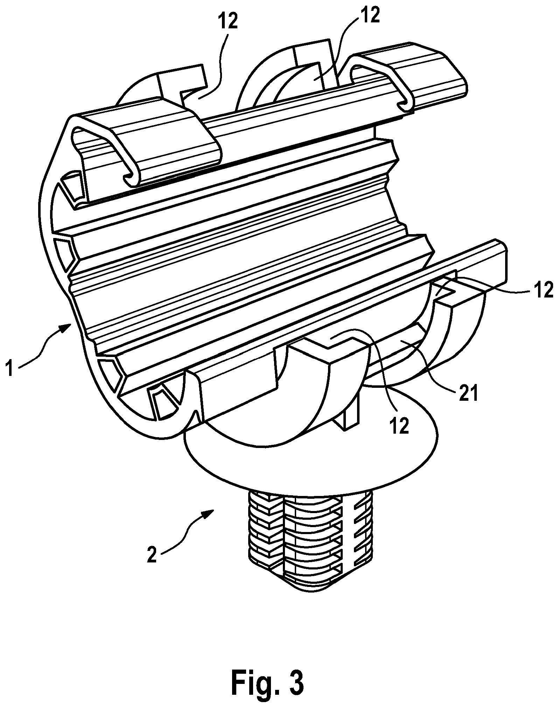

In Fig. 3 ist die Aufnahme des Führungselementes 21 des Fixierelements 2 von der Lagerung der Schelle 1, also deren Nuten 12 erfolgt. Beispielgemäß ist das Fixierelement rotatorisch beweglich von den Nuten 12 der Schelle 1 gelagert. Über diese Lagerung ist Fixierelement 2 mit Schelle 1 mechanisch verbunden und geführt, mit einem Freiheitsgrad entlang der Krümmung bzw. der Umfangslinie der Mantelfläche der Schelle 1.

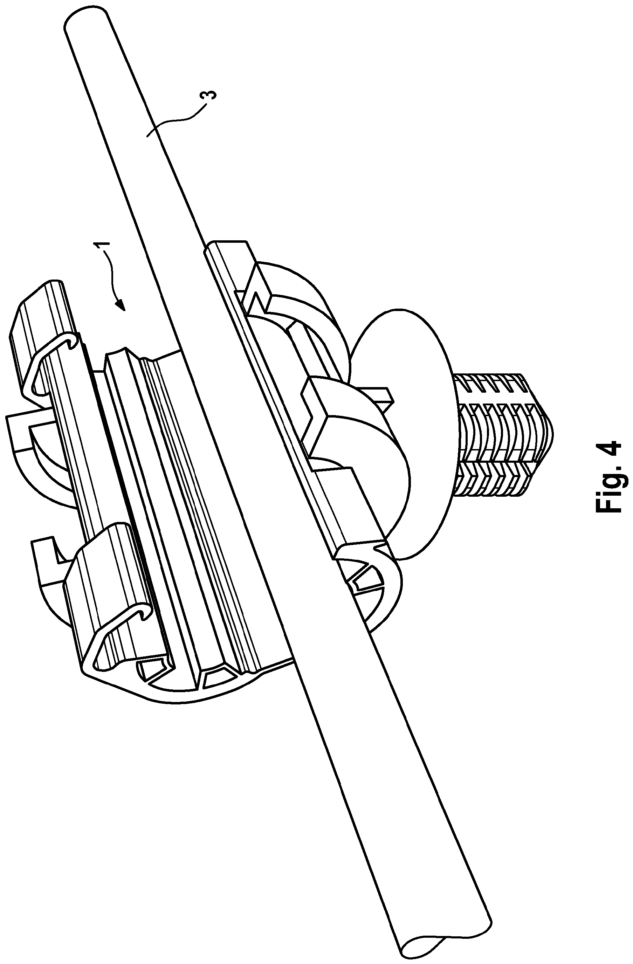

Fig. 4 zeigt ein Kabel 3 welches in Schelle 1 eingelegt ist.

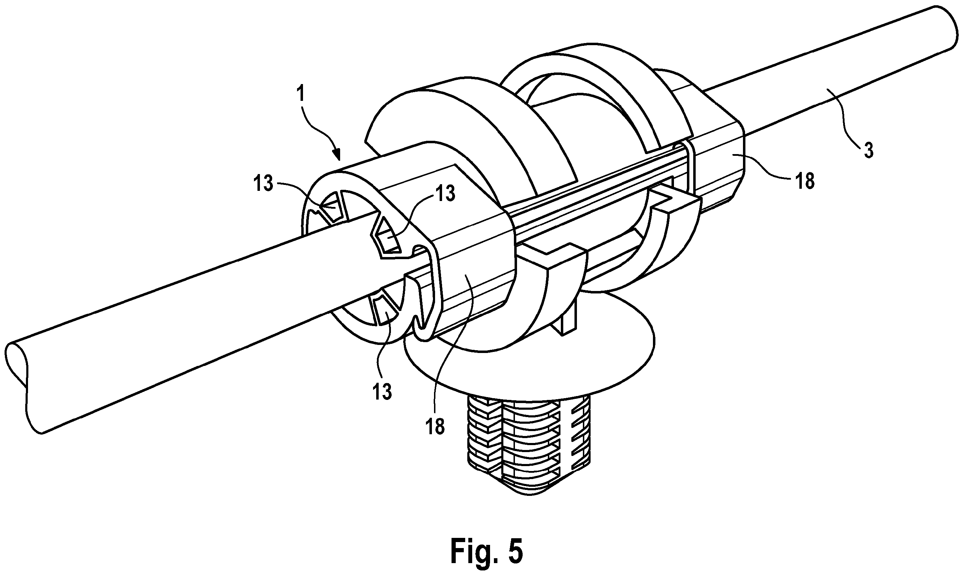

In Fig. 5 ist die Befestigungseinrichtung in geschlossenem Zustand, ein Kabel 3 umgreifend und einspannend, dargestellt. Dabei ist Schelle 1 mittels der formschlüssigen Verschlussmittel 18 geschlossen. Kabel 3 wird von den Halterippen 13 gelagert und fest eingespannt. Schelle 1 und die Halterippen 13 sind bezüglich des einzuspannenden Kabels 3 so ausgebildet, dass eine kraftschlüssige Einspannung des Kabels 3 erreicht wird, die ein Verdrehen und Verschieben des Kabels in bzw. relativ zur Schelle 1 verhindert.

Die Halterippen 13 sind dabei beispielgemäß elastisch bzw. plastisch verformbar ausgebildet, wodurch die Kraftübertragung auf das Kabel bzw. ein Haftsitz des Kabels auf den Halterippen 13 der Schelle 1 gewährleistet bzw. ermöglicht bzw. verwirklicht wird.

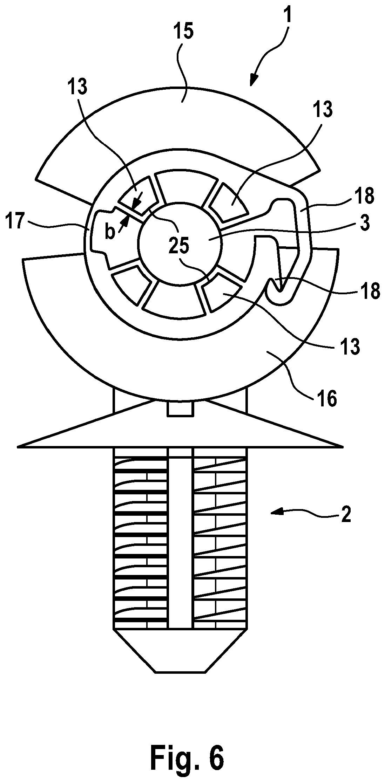

Anhand der Fig. 6 ist die Befestigungseinrichtung aus der Seitenansicht mit einem eingelegten bzw. eingespannten Kabel 3 veranschaulicht. Die Befestigungseinrichtung umfasst Schelle 1 und Fixierelement 2. Schelle 1 ist geschlossen. Die beiden Segmente 15 und 16 sind auf der einen Seite mittels Filmschanier einstückig verbunden und auf der anderen Seite mittels des bzw. der Verschlussmittel 18 formschlüssig verbunden. Aus der Seitenansicht sind Halterippen 13 erkennbar, welche beispielgemäß eine im Wesentlichen trapezförmige Querschnittsfläche bzw. ein solches Profil aufweisen. Dabei sind die Halterippen 13 hohl ausgebildet und weisen eine Wandstärke b auf, welche geringer als ein Fünftel der mittleren Breite der Halterippen dimensioniert ist. Die nach innen gewandte Seitenfläche 25 der Halterippen, welche das Kabel 3 jeweils lagert ist beispielhaft abgerundet ausgebildet, wobei die Abrundung als Ausnehmung ausgebildet ist bzw. als konkave Abrundung ausgebildet ist bzw. im Wesentlichen dem Außenmantel des Kabels 3 angepasst oder angenähert ausgebildet ist.

## Patentansprüche

1. Befestigungseinrichtung zur Fixierung wenigstens eines Kabels (3), wobei die Befestigungseinrichtung eine Schelle (1) zur Aufnahme und/oder Fixierung eines Kabels (3) umfasst, wobei die Schelle (1) so ausgebildet ist, dass sie das Kabel (3) zumindest teilweise umgreifen kann und kraftschlüssig und/oder formschlüssig einspannen kann, und wobei die Befestigungseinrichtung ein Fixierelement (2) aufweist, das ein Führungselement (21) und ein Halteelement (22) umfasst, wobei das Führungselement (21) mechanisch mit der Schelle (1) verbunden ist und das Halteelement (22) so ausgelegt ist, dass dieses eine positionsfeste Lagerung der Befestigungseinrichtung ermöglicht wobei das Führungselement (21) in der Schelle (1), in einer die Schelle (1) bezüglich deren Mantelfläche zumindest teilweise umlaufenden Lagerung (12), gelagert ist.

2. Befestigungseinrichtung nach Anspruch 1, **dadurch gekennzeichnet, dass** die zumindest teilweise umlaufende Lagerung (12) der Schelle (1) zur Lagerung des Führungselements (21) zwei Nuten (12) aufweist, welche so ausgebildet sind, dass sie jeweils eine Kante (24)oder Seite des Führungselements aufnehmen und wobei die Nuten (12) jeweils im Wesentlichen entlang der Krümmung der Mantelfläche ausgebildet sind.

3. Befestigungseinrichtung nach Anspruch 1 oder 2, **dadurch gekennzeichnet, dass** das Führungselement (21) eine Platte (23) aufweist, welche im Wesentlichen als Mantelflächensegment eines Zylinders ausgebildet ist und/oder dem Krümmungsverlauf der Mantelfläche der Schelle (1) entsprechend oder von diesem abhängig ausgebildet ist.

4. Befestigungseinrichtung nach mindestens einem der Ansprüche 1 bis 3, **dadurch gekennzeichnet, dass** die Schelle (1) so ausgebildet ist, dass sie ein Kabel (3) zumindest teilweise in kraftschlüssiger Art umgreifen und fixieren kann, so dass das Kabel (3) in der Schelle (1) gegen Verdrehen und Verschieben gesichert ist, indem die Schelle Haltemittel (13) aufweist, welche das Kabel (3) an dessen Außenumfang einspannen können.

5. Befestigungseinrichtung nach Anspruch 4, **dadurch gekennzeichnet, dass** die Haltemittel der Schelle (1) als Halterippen (13) und/oder als Haltenoppen und/oder als Haltelamellen ausgebildet sind.

6. Befestigungseinrichtung nach Anspruch 5, **dadurch gekennzeichnet, dass** die Halterippen (13) der Schelle hohl und/oder nicht massiv sowie elastisch ausgebildet sind.

7. Befestigungseinrichtung nach Anspruch 6, **dadurch gekennzeichnet, dass** die Halterippen (13) eine Wandstärke (b) aufweisen, welche geringer ist als ein Drittel oder insbesondere ein Fünftel der mittleren Breite der Halterippen oder der Höhe der Halterippen.

8. Befestigungseinrichtung nach mindestens einem der Ansprüche 5 bis 7, **dadurch gekennzeichnet, dass** die Halterippen (13) bezüglich ihrer Querschnittsfläche und/oder ihres Profils im Wesentlichen trapezförmig ausgebildet sind, insbesondere ist die nach innen gewandte Seitenfläche der Halterippen (13), welche zur Lagerung des Kabels (3) ausgelegt ist, abgerundet ausgebildet, wobei die Abrundung als Ausnehmung in die Halterippenoberseitenfläche ausgebildet ist.

9. Befestigungseinrichtung nach mindestens einem der Ansprüche 1 bis 8, **dadurch gekennzeichnet, dass** die Schelle (1) einstückig ausgebildet ist, wobei sie zwei Segmente (15, 16) aufweist, die miteinander an einer Seite verbunden sind, insbesondere mittels eines Filmschaniers (17) und/oder mittels eines elastischen Stegs, und wobei die andere Seite auf- und zuklappbar ist und ein formschlüssiges Verschlussmittel (18) aufweist.

10. Befestigungseinrichtung nach mindestens einem der Ansprüche 1 bis 9, **dadurch gekennzeichnet, dass** das wenigstens eine Halteelement (22) des Fixierelements (2) als Zapfen oder Pfeilkopf ausgebildet ist.

## Claims

1. Fastening device for fixing at least one cable (3), wherein the fastening device comprises a clip (1) for receiving and/or fixing a cable (3), wherein the clip (1) is designed such that it can at least partially engage around the cable (3) and can clamp said cable in a force-fitting and/or interlocking manner, and wherein the fastening device has a fixing element (2) which comprises a guide element (21) and a retaining element (22), wherein the guide element (21) is mechanically connected to the clip (1), and the retaining element (22) is designed such that it allows the fastening device to be mounted in a fixed position, wherein the guide element (21) is mounted in the clip (1) in a mount (12) which at least partially surrounds the clip (1) with respect to its casing surface.

2. Fastening device according to Claim 1, **characterized in that** the at least partially surrounding mount (12) of the clip (1) has two grooves (12) for mounting the guide element (21), said grooves being designed such that they each receive an edge (24) or side of the guide element, and wherein the grooves (12) are each designed substantially along the curvature of the casing surface.

3. Fastening device according to Claim 1 or 2, **characterized in that** the guide element (21) has a panel (23) which is substantially in the form of a casing surface segment of a cylinder and/or is designed to correspond to the curvature profile of the casing surface of the clip (1) or is designed depending on said curvature profile.

4. Fastening device according to at least one of Claims 1 to 3, **characterized in that** the clip (1) is designed such that it can engage around a cable (3) at least partially in a force-fitting manner and fix said cable, so that the cable (3) is secured against rotation and displacement in the clip (1) by the clip having retaining means (13) which can clamp the cable (3) at its outer circumference.

5. Fastening device according to Claim 4, **characterized in that** the retaining means of the clip (1) are in the form of retaining ribs (13) and/or in the form of retaining protrusions and/or in the form of retaining fins.

6. Fastening device according to Claim 5, **characterized in that** the retaining ribs (13) of the clip are hollow and/or not solid and also elastic.

7. Fastening device according to Claim 6, **characterized in that** the retaining ribs (13) have a wall thickness (b) which is lower than one third or, in particular, one fifth of the average width of the retaining ribs or of the height of the retaining ribs.

8. Fastening device according to at least one of Claims 5 to 7, **characterized in that** the retaining ribs (13) are substantially trapezoidal with respect to their cross-sectional area and/or their profile, in particular the inwardly facing side surface of the retaining ribs (13), which is designed to mount the cable (3), is rounded, wherein the rounded portion is in the form of a recess in the top surface of the retaining ribs.

9. Fastening device according to at least one of Claims 1 to 8, **characterized in that** the clip (1) is of integral design, wherein it has two segments (15, 16) which are connected to one another on one side, in particular by means of a film hinge (17) and/or by means of an elastic web, and wherein the other side can be folded open and folded closed and has an interlocking closure means (18).

10. Fastening device according to at least one of Claims 1 to 9, **characterized in that** the at least one retaining element (22) of the fixing element (2) is in the form of a tap or arrowhead.

## Revendications

1. Dispositif d'attache pour fixer au moins un câble (3), le dispositif d'attache comprenant un collier (1) pour recevoir et/ou fixer un câble (3), le collier (1) étant réalisé de telle sorte qu'il peut entourer au moins partiellement le câble (3) et le serrer par adhérence et/ou par complémentarité de forme, et le dispositif d'attache présentant un élément de fixation (2), qui comprend un élément de guidage (21) et un élément de retenue (22), l'élément de guidage (21) étant relié mécaniquement au collier (1) et l'élément de retenue (22) étant conçu de telle sorte que celui-ci permet un montage fixe en position du dispositif d'attache,
l'élément de guidage (21) étant monté dans le collier (1), dans un palier (12) au moins partiellement périphérique autour du collier (1) au regard de sa surface d'enveloppe.

2. Dispositif d'attache selon la revendication 1, **caractérisé en ce que** le palier (12) au moins partiellement périphérique du collier (1) présente deux rainures (12) pour le montage de l'élément de guidage (21), qui sont réalisées de telle sorte qu'elles reçoivent chacune un bord (24) ou un côté de l'élément de guidage et les rainures (12) étant réalisées chacune essentiellement le long de la courbure de la surface d'enveloppe.

3. Dispositif d'attache selon la revendication 1 ou 2, **caractérisé en ce que** l'élément de guidage (21) présente une plaque (23), qui est réalisée essentiellement sous forme de segment de surface d'enveloppe d'un cylindre et/ou qui est réalisée pour correspondre au tracé de courbure de la surface d'enveloppe du collier (1) ou en fonction de celui-ci.

4. Dispositif d'attache selon au moins l'une quelconque des revendications 1 à 3, **caractérisé en ce que** le collier (1) est réalisé de telle sorte qu'il peut entourer et fixer un câble (3) au moins partiellement par adhérence, de telle sorte que le câble (3) est bloqué dans le collier (1) contre la torsion et le déplacement, par le fait que le collier présente des moyens de retenue (13) qui peuvent serrer le câble (3) sur sa circonférence extérieure.

5. Dispositif d'attache selon la revendication 4, **caractérisé en ce que** les moyens de retenue du collier (1) sont réalisés sous forme de nervures de retenue (13) et/ou de picots de retenue et/ou de lamelles de retenue.

6. Dispositif d'attache selon la revendication 5, **caractérisé en ce que** les nervures de retenue (13) du collier sont réalisées sous forme creuse et/ou non massive ainsi qu'élastique.

7. Dispositif d'attache selon la revendication 6, **caractérisé en ce que** les nervures de retenue (13) présentent une épaisseur de paroi (b) qui est inférieure à un tiers ou notamment à un cinquième de la largeur moyenne des nervures de retenue ou de la hauteur des nervures de retenue.

8. Dispositif d'attache selon au moins l'une quelconque des revendications 5 à 7, **caractérisé en ce que** les nervures de retenue (13) sont réalisées sous forme essentiellement trapézoïdale au regard de leur surface de section transversale et/ou de leur profil, notamment la surface latérale des nervures de retenue (13) qui est tournée vers l'intérieur, qui est conçue pour le montage du câble (3), est réalisée sous forme arrondie, l'arrondi étant réalisé sous forme d'évidement dans la surface latérale supérieure des nervures de retenue.

9. Dispositif d'attache selon au moins l'une quelconque des revendications 1 à 8, **caractérisé en ce que** le collier (1) est réalisée en une seule pièce, présentant deux segments (15, 16) qui sont reliés l'un à l'autre sur un côté, notamment au moyen d'une charnière à film (17) et/ou au moyen d'une entretoise élastique, et l'autre côté pouvant être ouvert et fermé par rabattement et présentant un moyen de fermeture (18) par complémentarité de forme.

10. Dispositif d'attache selon au moins l'une quelconque des revendications 1 à 9, **caractérisé en ce que** l'au moins un élément de retenue (22) de l'élément de fixation (2) est réalisé sous forme de tenon ou de tête de flèche.
